# EUROPEAN PATENT APPLICATION

(11) **EP 4 597 253 A1**
(43) Date of publication of application: **06.08.2025**
(21) Application number: 23869663.7
(22) Date of filing: 24.05.2023
(51) Int. Cl.: G05D 23/24

(54) **TEMPERATURE CONTROL SYSTEM FOR HOT SURFACE IGNITER**

(30) Priority: 30.09.2022 CN 202211205378
(71) Applicant: CHONGQING LE-MARK TECHNOLOGY CO., LTD., Jiulongpo District Chongqing 401329 (CN)
(72) Inventor: LEIGH, Peter, Chongqing 401329 (CN)
(74) Representative: Angerhausen, Christoph
(86) International application number: PCT/CN2023/096025
(87) International publication number: WO 2024/066410

(57) **Abstract**

Disclosed in the present invention is a temperature control system for a hot surface igniter, said system comprising: a power source module, for providing energy of the system; a driving module, for outputting a voltage to the hot surface igniter; a collection module, for sampling a thermoelectric signal of the hot surface igniter; a feedback module, for receiving the thermoelectric signal, receiving a voltage control quantity calculated according to the thermoelectric signal, and then performing feedback; and a control module, for receiving the voltage control quantity that is fed back and controlling the output of the power source module according to the voltage control quantity. The present invention can enable the hot surface igniter to receive a suitable voltage to ensure that the hot surface igniter operates at a set target temperature, thereby realizing precise control over the operating temperature of the hot surface igniter, and increasing the service life of the hot surface igniter.

## Description

### TECHNICAL FIELD

The present invention relates to a control system, and in particular to a temperature control system for a hot surface igniter.

### BACKGROUND

A hot surface igniter, as an automatic ignition device, uses a hot surface ignition technology, which can allow for combustible gas/fuel oil to enter a combustion region after the hot surface igniter reaches a high temperature in advance, thereby completely avoiding possible problems caused by electric sparks. When the hot surface igniter is in operation, a voltage is applied to the hot surface igniter by a power source, and then a heating element of the hot surface igniter operates for ignition. However, on the one hand, since a conventional hot surface igniter uses a constant-v power supply method, after a voltage is applied, on the basis of the effects of the material of the heating element itself and the physical structure thereof, the temperature of the hot surface igniter is not adjustable. On the other hand, for most fields, the conventional hot surface igniter only has an ignition function when applied, this means that the conventional hot surface igniter does not really operate for a long time even after long-term use, and thus the service life of the hot surface igniter is generally long. But in some special application fields, for example, in the automobile industry, the hot surface igniter needs to operate all the time, and thus the service life of hot surface igniters applied in these special fields will be shortened to a great extent; furthermore, when in use, the voltage fluctuates, and the working conditions are also complicated, for example, the voltage fluctuates between high and low, and the temperature of the operating environment fluctuates between cold and hot, which causes great impact on the heating element of the hot surface igniter, thereby further reducing the service life of the hot surface igniter.

Chinese patent application no. CN 110594783 B discloses a control strategy for a hot surface igniter, in which on the basis of a hardware circuit of the hot surface igniter and a software algorithm, operating time of the hot surface igniter is divided into time periods t1, t2, ..., tn, and in each time period, an output voltage or output power of the hardware circuit is adjusted by the software algorithm, such that the hot surface igniter reaches an expected temperature. By the control strategy of the present invention, the ignition time of the hot surface igniter can be easily controlled, thereby satisfying the requirements of customers who need to achieve ignition in a short time. The prior art document has the following disadvantages: in this prior art document, the output voltage is controlled by sampling the output voltage so as to control the temperature, but the temperature is not measured; therefore, during the control process, control on the temperature is not precise enough, and once over-temperature of the hot surface igniter occurs, the problem of short service life still exists.

### SUMMARY

In order to solve the problem of short service life of a hot surface igniter in the prior art, the present invention provides a temperature control system for a hot surface igniter, said system comprising: a power source module, for providing energy of the system;
a driving module, for outputting a voltage to the hot surface igniter;
a collection module, for sampling a thermoelectric signal of the hot surface igniter;
a feedback module, for receiving the thermoelectric signal, receiving a voltage control quantity calculated according to the thermoelectric signal, and then performing feedback; and
a control module, for receiving the voltage control quantity that is fed back and controlling the output of the power source module according to the voltage control quantity.

The present invention has the following beneficial effects: in this solution, after the collection module samples the electrical signal of the hot surface igniter, the feedback module receives the electrical signal and performs feedback, and then the control module controls the output of the power source module, such that the hot surface igniter can receive a suitable voltage to ensure that the hot surface igniter operates at a set target temperature, thereby realizing precise control over the operating temperature of the hot surface igniter, and increasing the service life of the hot surface igniter.

Preferably, the driving module is used for outputting a driving voltage to the hot surface igniter, and the control module controls, according to the voltage control quantity, the duration of the driving voltage outputted by the driving module. In the present solution, the temperature of the hot surface igniter is controlled by controlling the duration of the outputted driving voltage, and when the temperature needs to be increased, it is only necessary to prolong the duration of the output, and the operation is simple.

Preferably, the driving module is used for outputting forward and reverse driving voltages generating forward and reverse currents to the hot surface igniter; and the control module controls, according to the voltage control quantity, the magnitude of an effective value of the forward and reverse driving voltages outputted by the driving module. In the present solution, the outputted driving voltage is forward and reverse voltages capable of generating forward and reverse currents; therefore, when the temperature of the hot surface igniter needs to be adjusted, it is only necessary to adjust the magnitude of the effective value of the outputted forward and reverse driving voltages, and the operation is simple.

Preferably, the collection module comprises an analog switch unit, for collecting a thermoelectric signal from a power supply electrode of the hot surface igniter. In view of the fact that the thermoelectric signal on the power supply electrode of the hot surface igniter is at a millivolt level, the variation amount of the signal along with temperature is only at a microvolt level, and such a weak signal, in turn, is mixed with an operating voltage of the hot surface igniter. This means that on the power supply electrode of the hot surface igniter, the thermoelectric signal of microvolt-level variation will be accompanied by complex differential mode and common mode interference. Therefore, in this solution, the arrangement of the analog switch unit can collect the thermoelectric signal from the power supply electrode of the hot surface igniter cleanly and accurately, which can ensure precise adjustment of the subsequent control module.

Preferably, the collection module further comprises an amplification unit, for enabling the thermoelectric signal to be transmitted without distortion. In this solution, after the collection module is provided with the amplification unit, common mode interference on a signal channel is effectively suppressed, thereby smoothly collecting the thermoelectric signal.

Preferably, the collection module is further used for collecting an electrical signal; the feedback module is further used for receiving the electrical signal and receiving feedback of whether an electrical environment is anomalous according to the electrical signal; and the control module controls, when receiving a feedback signal indicating that the electrical environment is anomalous, the power source module to turn off output. In the present solution, the electrical environment of the hot surface igniter can be determined after the electrical signal is collected, and when the electrical environment is anomalous, the output is turned off, such that anomalous use of the hot surface igniter can be avoided in time.

Preferably, an H-bridge driving circuit is built in the driving module. In this solution, the arrangement of the H-bridge driving circuit can realize the output of periodic forward and reverse pulse voltages, thereby further improving the service life of the hot surface igniter.

Preferably, a DC-DC conversion circuit is built in the power source module. In this solution, the arrangement of the DC-DC conversion circuit can realize wide voltage input of energy, thereby facilitating the use of a post-stage module of the system.

### BRIEF DESCRIPTION OF THE DRAWINGS

FIG. 1 is a block diagram of modules in embodiments of a temperature control system for a hot surface igniter in the present invention;
FIG. 2 is a flowchart of embodiments of a temperature control system for a hot surface igniter in the present invention;
FIG. 3 is a schematic diagram of an H-bridge driving circuit in a driving module in embodiments; and
FIG. 4 is a schematic diagram of a thermoelectric signal input channel in embodiments.

### DETAILED DESCRIPTION OF THE EMBODIMENTS

Hereinafter, detailed illustration will be further made by specific embodiments:

### 1. Definition

Pulse voltage: refers to transient abrupt change of a voltage or a current, and common pulse shapes include a rectangular pulse, a square-wave pulse, spike pulses (positive spike pulse and negative spike pulse), a sawtooth pulse, a stepped pulse, an intermittent sinusoidal pulse, etc., and the pulse voltage has abrupt change and discontinuity; wherein the pulse width is Ton, the pulse interval is Toff, and in a complete time period of the pulse voltage, the ratio of the Ton time period to a complete pulse time period, and one complete pulse period is equal to a sum of the Ton period and the Toff period.

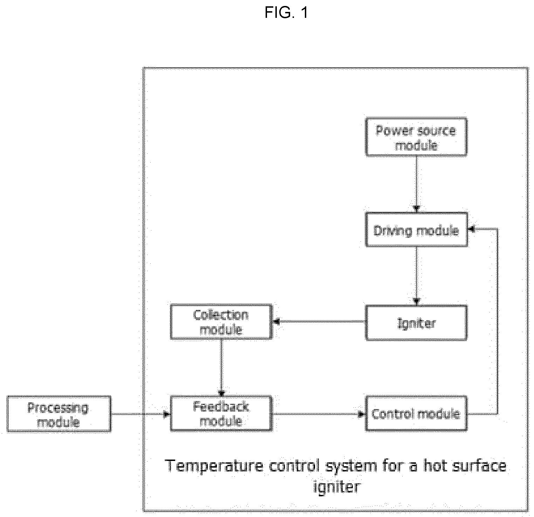

### 2. Embodiments are basically as shown in FIG. 1:

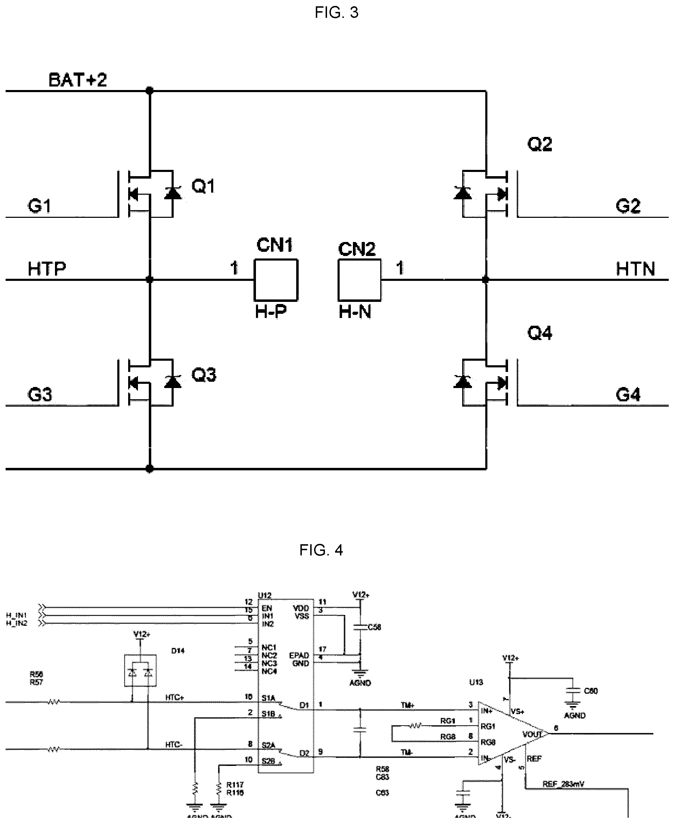

A temperature control system for a hot surface igniter, said system comprising: a power source module, for providing energy of the system, wherein a DC-DC conversion circuit is built in the power source module;
a driving module, for outputting a voltage to the hot surface igniter, wherein an H-bridge driving circuit is built in the driving module, and the H-bridge driving circuit is as shown in FIG. 3;
a collection module, for sampling a thermoelectric signal and an electrical signal of the hot surface igniter;
a feedback module, for receiving the thermoelectric signal and receiving a voltage control quantity calculated according to the thermoelectric signal and then performing feedback, and receiving the electrical signal and receiving feedback of whether an electrical environment is anomalous according to the electrical signal; and
a control module, for receiving the voltage control quantity that is fed back and controlling, according to the voltage control quantity, the duty cycle outputted by the driving module; and for controlling, when receiving a feedback signal indicating that the electrical environment is anomalous, the power source module to turn off output.

The collection module comprises an analog switch unit and an amplification unit; and by using the cooperation of the analog switch unit and the amplification unit, a useful thermoelectric signal can be extracted cleanly and accurately during the collection process. Specifically, after the analog switch unit with an ultralow on-resistance is heated at an inlet of the thermoelectric signal, on the one hand, when a high-voltage operating voltage appears, a high differential mode voltage is blocked from entering a thermoelectric signal input channel by means of the analog switch; and on the other hand, in a short period of time after the operating voltage disappears, the analog switch is turned on, such that the thermoelectric signal enters the thermoelectric signal input channel without impediment, thereby avoiding most of differential mode voltage interference. Furthermore, in cooperation with a PWM pulse square-wave voltage of the power source module, the voltage is convenient to be adjusted, and the thermoelectric signal can also be picked up at a low level moment of the PWM square wave. Moreover, the arrangement of the amplification unit having a high common mode rejection ratio and extremely low drift can effectively suppress common mode interference on a signal channel, such that the thermoelectric signal enters a collection channel "smoothly" without attenuation and obstruction, and is transmitted without distortion. In this embodiment, the analog switch unit is an analog switch chip, and the amplification unit is an instrumentation amplifier. The thermoelectric signal input channel is as shown in FIG. 4.

Note: When the temperature control system for a hot surface igniter in this embodiment is in use, it is used in cooperation with a processing module in which a voltage control quantity algorithm and a thermoelectric signal data table are built. When calculating the voltage control quantity, the voltage control quantity algorithm firstly obtains an difference between the current temperature and a target temperature, and then respectively multiplies the difference by a proportional coefficient, an integral coefficient and a differential coefficient and then performs summation on the products to finally obtain the voltage control quantity. The thermoelectric signal data table is a data table for temperature conversion. A voltage value Vt of the thermoelectric signal is obtained by an ADC (a mode converter), in which the voltage value has an intrinsic correlation with the temperature of the hot surface igniter, that is, when a certain voltage value Vt corresponds to a certain temperature value T, for example, when T = 800°C, the corresponding voltage value Vt = 0.373 V. Taking the temperature as indexes of an array and Vt as element values of the array, a thermoelectric signal data table represented by an array is formed.

In this embodiment, the power source module may adopt a PWM square-wave power supply mode, a direct-current power supply mode, and a sine wave alternating-current power supply mode, and preferably adopt the PWM pulse square-wave voltage power supply mode.

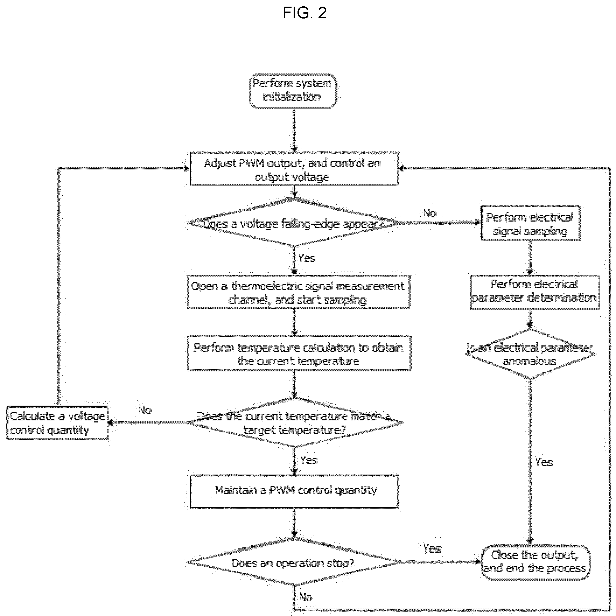

As shown in FIG. 2, the PWM pulse square-wave voltage power supply is taken as an example. A specific implementation process is as follows: during use, the system is initialized, the power source module supplies power to the entire system, and the driving module outputs periodic forward and reverse pulse voltages, i.e. a PWM pulse square-wave voltage, to the hot surface igniter.

When a voltage falling-edge signal of the hot surface igniter appears, i.e. in a PWM Toff period, a thermoelectric signal channel is opened and a thermoelectric signal is collected; then after the feedback module receives the collected thermoelectric signal, the processing module looks up a thermoelectric signal data table, to obtain the current temperature value. If the current temperature value matches a preset target temperature value, the driving module maintains a current PWM control quantity to control the power source module to continue to output; and if the current temperature value does not match the preset target temperature value, the current temperature value is used in a voltage control quantity algorithm for calculation, to obtain a voltage control quantity. After receiving the voltage control quantity, the feedback module feeds it back to the control module, and the control module controls, according to the voltage control quantity, the duty ratio of forward and reverse pulse voltages outputted by the driving module. If the current temperature is less than the target temperature, the duty ratio is increased to realize a temperature increase operation; and if the current temperature is greater than the target temperature, the duty ratio is decreased to realize a temperature decrease operation, such that the hot surface igniter obtains a suitable voltage, to ensure that the hot surface igniter operates at the set target temperature.

When a voltage rising-edge signal of the hot surface igniter appears, i.e. in a PWM Ton period, the thermoelectric signal channel is closed and an electrical signal representing an electrical parameter is collected, and whether the current electrical environment is anomalous is determined according to the electrical signal. Specifically, after collecting the electrical signal, the processing module obtains an electrical parameter according to the electrical signal, and then compares the same with a rated parameter corresponding to the hot surface igniter, to determine whether the electrical parameter is anomalous; and after receiving the determination result, the feedback module also feeds the determination result back to the control module. If the determination result shows that the electrical parameter is anomalous, the control module controls the power source module to turn off the output; and if the determination result shows that the electrical parameter is normal, the power source module continues to output.

Taking a constant-temperature direct-current voltage as an example, during use, the system is initialized, the power source module supplies power to the entire system, and the driving module outputs a constant-temperature direct-current voltage to the hot surface igniter. The control module controls, according to the voltage control quantity, the duration of the voltage outputted by the power source module, and the collection module collects the thermoelectric signal when the power source module stops supplying power, and collects the electrical signal when the power source module supplies power.

In this embodiment, by timed turning-off of the voltage supplied to the hot surface igniter for a short period of time, e.g. turning off for 0.1 ms, temperature measurement and calculation are performed by using this time period of 0.1 ms, and then a power supply module starts to supply power again immediately. In addition, the hot surface igniter has a certain thermal inertia, this short turning-off time does not affect the temperature continuity of the hot surface igniter, and thus normal temperature increase of the hot surface igniter can be ensured.

In addition, in other embodiments, the output voltage may also be outputted in a sine wave alternating-current power supply mode.

The content as described above merely relates to embodiments of the present invention, and common general knowledge such as well-known specific structures and characteristics in the solution is not redundantly described herein. A person of ordinary skill in the art would have been aware of all common technical knowledge in the technical field to which the present invention belongs before the filing date or the priority date, and would have access to all the prior art in the field, and have the capacity to apply routine experimental means before the date. Under the motivation provided in the present application, a person of ordinary skill in the art would have been able to improve and implement the present solution in combination with the capability thereof. Some typical well-known structures or well-known methods should not be obstacles for a person of ordinary skill in the art to implement the present application. It should be noted that, for a person skilled in the art, various modifications and improvements can also be made without departing from the structure of the present invention, and these modifications and improvements shall also be considered as belonging to the scope of protection of the present invention; and these modifications and improvements all do not affect the effect of implementation of the present invention and the applicability of the patent. The scope of protection of the present application shall be subject to the content of the claims, and the disclosure of specific embodiments and the like in the description can be used to interpret the content of the claims.

## Claims

1. A temperature control system for a hot surface igniter, comprising: a power source module, for providing energy of the system;
wherein said system further comprises: a driving module, for outputting a voltage to the hot surface igniter;
a collection module, for sampling a thermoelectric signal of the hot surface igniter;
a feedback module, for receiving the thermoelectric signal, receiving a voltage control quantity calculated according to the thermoelectric signal, and then performing feedback; and
a control module, for receiving the voltage control quantity that is fed back and controlling the output of the driving module according to the voltage control quantity.

2. The temperature control system for a hot surface igniter according to claim 1, wherein the driving module is used for outputting a driving voltage to the hot surface igniter, and the control module controls, according to the voltage control quantity, the duration of the driving voltage outputted by the driving module.

3. The temperature control system for a hot surface igniter according to claim 1, wherein the driving module is used for outputting forward and reverse driving voltages generating forward and reverse currents to the hot surface igniter; and the control module controls, according to the voltage control quantity, the magnitude of an effective value of the forward and reverse driving voltages outputted by the driving module.

4. The temperature control system for a hot surface igniter according to claim 3, wherein the collection module comprises an analog switch unit, for collecting a thermoelectric signal from a power supply electrode of the hot surface igniter.

5. The temperature control system for a hot surface igniter according to claim 4, wherein the collection module further comprises an amplification unit, for enabling the thermoelectric signal to be transmitted without distortion.

6. The temperature control system for a hot surface igniter according to any one of claim 1 or claims 3-5, wherein the collection module is further used for collecting an electrical signal;
the feedback module is further used for receiving the electrical signal and receiving feedback of whether an electrical environment is anomalous according to the electrical signal;
and the control module controls, when receiving a feedback signal indicating that the electrical environment is anomalous, the power source module to turn off output.

7. The temperature control system for a hot surface igniter according to claim 6, wherein an H-bridge driving circuit is built in the driving module.

8. The temperature control system for a hot surface igniter according to any one of claims 1-5, wherein a DC-DC conversion circuit is built in the power source module.
